# FASCICULE DE BREVET EUROPEEN

(11) **EP 2 978 987 B1**
(45) Date de publication et mention de la délivrance du brevet: **24.05.2017**
(21) Numéro de dépôt: 14721914.1
(22) Date de dépôt: 24.03.2014
(51) Int. Cl.: F16D 9/06

(54) **DISPOSITIF LIMITEUR DE COUPLE ET MACHINE AGRICOLE L'UTILISANT**
DREHMOMENTBEGRENZER UND LANDWIRTSCHAFTLICHE MASCHINE DAMIT
TORQUE-LIMITING DEVICE AND FARM MACHINE USING SAME

(30) Priorité: 28.03.2013 FR 1352826
(43) Date de publication de la demande: 03.02.2016
(73) Titulaire: KUHN S.A., 67700 Saverne (FR)
(72) Inventeur: ROUWENS, Julien, 69210 SAINT PIERRE LA PALUD (FR); BABLER, Damion, Albany, Wisconsin 53502 (US); WATTRON, Bernard, F-67700 Haegen (FR)
(74) Mandataire: Esch, Esther Evelyne
(86) Numéro de dépôt international: PCT/FR2014/050688
(87) Numéro de publication internationale: WO 2014/154992

(56) Documents cités:
- US-A- 1 574 466
- US-A- 2 084 862
- US-A- 4 758 109
- US-A1- 2012 064 981

## Description

La présente invention relève du domaine des machines agricoles et, a pour objet, d'une part, un dispositif limiteur de couple, en particulier dont l'élément de rupture travaille en cisaillement, et, d'autre part, une machine agricole, notamment une machine de récolte, en particulier une machine pour faucher et conditionner des végétaux tels que de l'herbe ou des plantes fourragères.

Dans ce domaine, la récolte des végétaux consiste essentiellement, d'une part, à les faucher, et, d'autre part, à conditionner les brins fauchés pour optimiser l'andain, en particulier son séchage. Le fauchage est réalisé à l'aide d'une unité de fauchage comprenant des rotors de fauchage portant des couteaux rotatifs, lesquels rotors de fauchage tournent autour d'un axe essentiellement vertical et sont montés les uns à côté des autres. Le conditionnement est réalisé par une unité de conditionnement placée en aval de l'unité de fauchage, et comportant essentiellement un ou plusieurs rotors de conditionnement. Ces derniers comportent, par exemple, une pluralité de pales, doigts, ou fléaux, montés pivotants autour d'un axe horizontal, transversal à la direction d'avancement de la machine, répartis angulairement dans des plans verticaux parallèles, alignés le long d'un ou de plusieurs arbres, de sorte à former un ensemble de conditionnement.

Dans une configuration sous la forme d'une machine tractée, la mise en mouvement, tant de l'unité de fauchage que de l'unité de conditionnement, s'effectue à partir d'une tête d'attelage connectée à un tracteur, entraînée en rotation par le tracteur lui-même et entraînant un arbre secondaire s'étendant dans un timon dont l'extrémité arrière est articulée à un châssis portant les deux unités, ledit arbre entraînant lui-même un arbre tertiaire aboutissant environ à une extrémité latérale de ces deux unités.

L'unité de fauchage est classiquement mise en mouvement par l'arbre tertiaire à l'aide d'un engrenage placé entre eux, qui entraîne le premier rotor de fauchage, et en mettant en place un entraînement entre eux des rotors de fauchage successifs, par exemple une cascade d'engrenages disposée sous les rotors de fauchage. L'unité de conditionnement est, quant à elle, mise en mouvement par l'intermédiaire d'un carter de transmission, s'étendant sur le côté de la machine et donc à l'extrémité latérale de l'unité de conditionnement. Ce carter de transmission utilise généralement des courroies qui, en cas de surcharge, voire de blocage, de l'unité de conditionnement, se mettent à glisser sur leurs poulies. Il en résulte une détérioration rapide des poulies, voire une rupture des courroies qui peut endommager d'autres pièces de la chaîne de transmission de mouvement. De tels dommages ont pour corollaire un temps d'immobilisation important de la machine ainsi que des frais de remise en état élevés.

Ce genre de surcharge peut intervenir si un paquet dense de végétaux fauchés, une pierre, une branche ou une souche d'arbre, arrive dans l'unité de conditionnement.

Dans le but de fiabiliser la transmission de mouvement qu'effectue ce carter, il est intéressant d'utiliser une transmission par engrenages à cet endroit. Cependant, afin de limiter l'encombrement et le coût d'une telle transmission, un surdimensionnement de ces engrenages doit être évité. L'emploi d'engrenages de dimensions réduites rend nécessaire un dispositif limiteur de couple entre ce jeu d'engrenages et l'unité de conditionnement, afin d'éviter un endommagement desdits engrenages en cas de surcharge de l'unité de conditionnement.

A cet effet, l'invention propose tout d'abord d'utiliser à cet endroit un limiteur de couple comportant un organe de cisaillement, du type tige parallèle à l'axe de rotation.

Néanmoins, le recours à de tels limiteurs de couple présente, dans ce contexte, un inconvénient majeur, puisque tant pour des raisons de dimensionnement des pièces intervenant dans la transmission du couple que pour des raisons d'encombrement, il peut être délicat, voire impossible, d'avoir accès, avec les outils nécessaires, à la zone dans laquelle il est nécessaire d'intervenir pour changer l'organe de cisaillement après sa rupture.

A cet effet, l'invention propose d'aménager, au sein même du limiteur de couple, l'un des deux blocages nécessaires pour serrer le boulon correspondant à l'organe de cisaillement.

L'invention a ainsi pour objet un dispositif limiteur de couple pour la transmission sécurisée d'une rotation entre un socle d'entrée et un socle de sortie qu'il présente, où ledit dispositif limiteur de couple comprend au moins un boulon d'entraînement qui forme un organe de rupture par cisaillement en cas de couple au-delà d'un seuil prédéterminé, et où ledit boulon comprend un écrou et une vis et présente des parties de retenue. Un tel dispositif limiteur de couple est notamment connu du document US 4 758 109. Sur ce dispositif connu, chaque socle comporte un trou respectif pour le passage de la vis. Dans l'un des socles, la tête de la vis est en appui contre un épaulement formant l'embouchure du trou de ce socle. Dans l'autre socle, l'écrou est en appui contre un autre épaulement formant l'embouchure du trou pratiqué dans cet autre socle. Le serrage du boulon entre les deux épaulements plaque le socle d'entrée et le socle de sortie l'un contre l'autre suivant leur axe de rotation. Le boulon est calibré pour se rompre lorsque le couple d'entraînement dépasse le seuil prédéterminé. Cependant, pour que la rupture du boulon ait effectivement lieu lorsque le couple d'entraînement dépasse le seuil prédéterminé, il faut que la rupture du boulon soit obtenue par son cisaillement. Pour que cette condition soit efficacement remplie, il est souhaitable que l'un des trous présente une géométrie précise et/ou des caractéristiques mécaniques élevées. Il est notamment souhaitable que ce trou présente un diamètre qui soit ajusté précisément au diamètre de la vis. Un positionnement suffisamment précis du trou au sein du socle peut aussi être requis, ce qui implique alors qu'au moins une grande partie du socle soit exécutée avec des tolérances de fabrication fines. Il est en sus préférable que ce trou soit réalisé dans une partie du socle ayant une dureté importante, par le biais d'un matériau dont la nuance est suffisamment dure au départ ou par le biais d'un traitement thermique ultérieur. Cependant, sur un dispositif limiteur de couple du type connu, il peut ne pas être économiquement et/ou mécaniquement souhaitable de réaliser au moins une grande partie, voire la totalité du socle avec des tolérances de fabrication fines, ni de la réaliser dans un matériau dur ou faisant l'objet d'un traitement thermique ultérieur à des opérations d'usinage préliminaires. Par exemple, le choix d'une nuance de matériau dure pour le socle peut compliquer les opérations d'usinage exécutées à des endroits du socle autres que celui où se trouve le trou. Par ailleurs, un traitement thermique d'une grande partie ou de la totalité du socle à la suite d'opérations d'usinage préliminaires, génère des déformations de la pièce et donc des reprises d'usinage ultérieures. Il pourrait être envisagé de réaliser le trou dans un insert présentant une dureté importante, mais cela complique l'exécution du socle dans son ensemble. Il pourrait aussi être envisagé de limiter le traitement thermique du socle au voisinage du trou, cependant des déformations du socle ne sont pas exclues et peuvent empêcher son bon accouplement avec l'autre socle.

La présente invention a pour but un dispositif limiteur de couple ne présentant pas les inconvénients précités. A cet effet, le dispositif limiteur de couple selon l'invention est caractérisé en ce qu'il présente, en outre, un socle intermédiaire qui est entraîné par le socle d'entrée et qui entraîne à son tour le socle de sortie, le, au moins un boulon assure l'entraînement du socle intermédiaire par le socle d'entrée ou l'entraînement du socle de sortie par le socle intermédiaire, le socle intermédiaire présente au moins un moyen de blocage par coopération de forme avec une partie de retenue du boulon, à savoir essentiellement l'écrou ou la tête de la vis du boulon, pour permettre son montage avec un seul outil de vissage, du type clé plate ou autre, et le socle intermédiaire prend la forme de deux platines plaquées l'une contre l'autre dans le sens de l'axe de rotation du dispositif limiteur de couple, l'une des platines sert au logement de la partie de retenue du boulon, l'autre sert à la fois à l'appui axial de la partie de retenue ainsi qu'au logement de la tige de vis.

Il est ainsi possible de prévoir des matériaux ayant des propriétés mécaniques différentes et/ou d'envisager des caractéristiques dimensionnelles plus ou moins précises et/ou de prévoir des procédés de fabrication différents, notamment plus ou moins onéreux et/ou plus ou moins précis, entre d'une part le socle d'entrée et/ou le socle de sortie, et d'autre part les platines, ainsi qu'entre les platines elles-mêmes. Cette possible différenciation du matériau composant ces différentes pièces et/ou de leur caractéristiques géométriques et/ou de leurs procédés de fabrication en fonction des contraintes mécaniques auxquelles ces pièces sont soumises, permet d'abaisser le coût du dispositif limiteur de couple. Il est notamment possible de prévoir que la platine servant à la fois à l'appui axial de la partie de retenue ainsi qu'au logement de la tige de vis, soit réalisée dans un matériau et/ou suivant un procédé de fabrication élaboré de sorte que ledit logement présente des caractéristiques mécaniques élevées. En cas de couple d'entraînement dépassant le seuil prédéterminé, la tige de la vis est empêchée de mater la surface intérieure du logement. A l'inverse, l'autre platine comportant le logement de la partie de retenue dont la forme coopère avec celle du logement, peut être réalisée dans un matériau et/ou suivant un procédé de fabrication plus simple et/ou moins onéreux. En effet, le logement dans cette autre platine a essentiellement pour fonction de maintenir en rotation cette partie de retenue lors des opérations de montage et démontage du boulon de cisaillement, la résistance mécanique de ce logement peut donc être moins élevée. Il est par ailleurs possible de prévoir que le trou de passage de la vis dans la platine servant à la fois à l'appui axial de la partie de retenue ainsi qu'au logement de la tige de vis, soit réalisé avec précision. De la sorte, la tige de vis s'y trouve ajustée précisément. En cas de couple d'entraînement dépassant le seuil prédéterminé, la tige de la vis est empêchée de battre dans le trou. A l'inverse, le logement de la partie de retenue dans l'autre platine, dont la fonction est essentiellement le maintien en rotation de cette partie de retenue, peut être réalisé avec des tolérances de fabrication moins précises. Ainsi, l'invention permet au passage pour la tige de vis dans une platine d'être réalisé précisément et/ou de présenter une résistance mécanique élevée. Il en résulte un meilleur contrôle du couple auquel le boulon se rompt, car celui-ci est effectivement sollicité au cisaillement. Cet effet avantageux est obtenu en conservant la possibilité d'un coût de fabrication réduit du dispositif limiteur de couple en raison de la présence du socle intermédiaire prenant la forme de deux platines distinctes.

L'invention a aussi pour objet une machine agricole, notamment pour faucher et conditionner des végétaux, présentant un ensemble rotatif, notamment de conditionnement de végétaux coupés, entraîné par un jeu d'engrenages.

Cette machine est caractérisée en ce qu'elle comprend un dispositif limiteur de couple tel que décrit plus haut, monté entre le jeu d'engrenages au niveau du socle d'entrée et l'ensemble rotatif au niveau du socle de sortie, et dimensionné pour éviter de dégrader le jeu d'engrenages en cas de blocage de l'ensemble rotatif.

L'invention sera mieux comprise grâce à la description ci-après, qui en présente encore d'autres avantages et qui se rapporte à des modes de réalisation préférés, donnés à titre d'exemples non limitatifs, et expliqués avec référence aux dessins schématiques annexés, dans lesquels :
- la figure 1 est une vue schématique d'un dispositif limiteur de couple selon l'invention ;
- la figure 2 est une vue en perspective d'un premier mode de réalisation ;
- la figure 3 montre un dispositif limiteur de couple partiellement démonté ;
- la figure 4 montre un dispositif limiteur de couple selon un deuxième mode de réalisation ;
- la figure 5 est une vue en coupe d'un dispositif limiteur de couple selon l'invention ;
- la figure 6 montre l'intérieur du carter de transmission, et
- la figure 7 montre une machine agricole comportant un dispositif limiteur de couple conforme à l'invention.

L'invention a donc pour objet un dispositif limiteur de couple (1) pour la transmission sécurisée d'une rotation entre un socle d'entrée (2) et un socle de sortie (3) qu'il présente, où ledit dispositif limiteur de couple (1) comprend au moins un boulon (5) d'entraînement qui forme un organe de rupture par cisaillement en cas de couple au-delà d'un seuil prédéterminé, et où ledit boulon (5) comprend un écrou et une vis et présente des parties de retenue. Les parties de retenues servent à son serrage par vissage et prennent donc préférentiellement la forme d'un écrou et d'une tête de vis de formes hexagonales.

Le boulon (5) participe donc à transmettre le couple depuis le socle d'entrée (2) vers le socle de sortie (3) et travaille en cisaillement pour cette transmission. Le boulon (5) se place donc parallèlement à l'axe de rotation. Le socle d'entrée (2) est entraîné par un élément extérieur au dispositif limiteur de couple (1), et le socle de sortie (3) entraîne à son tour une partie en aval. Le dispositif limiteur de couple (1) est donc monté dans une chaîne cinématique entre une partie en amont, fixée au socle d'entrée (2) et une partie en aval, fixée au socle de sortie (3).

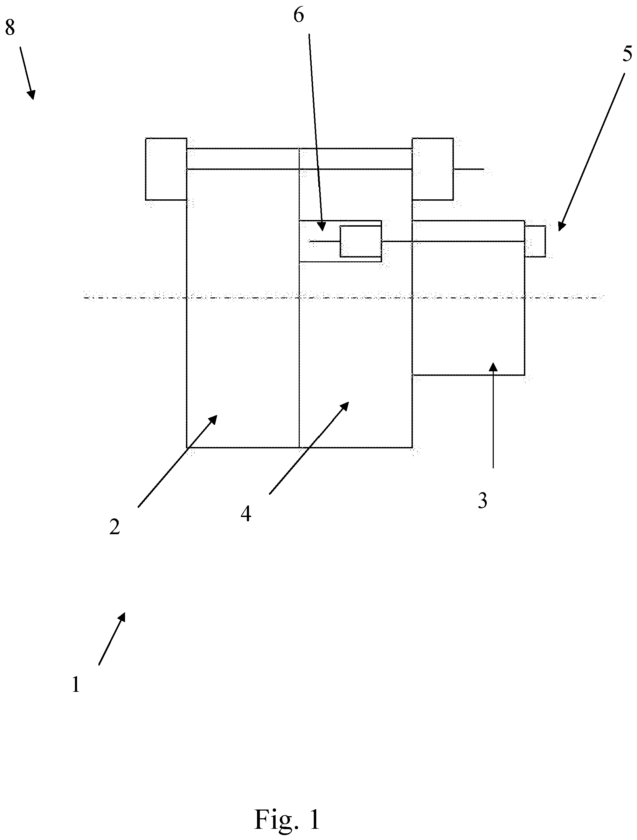

L'invention est notamment caractérisée en ce que le dispositif limiteur de couple (1) présente, en outre, un socle intermédiaire (4) qui est entraîné par le socle d'entrée (2) et qui entraîne à son tour le socle de sortie (3),
le au moins un boulon (5) assure l'entraînement du socle intermédiaire (4) par le socle d'entrée (2) ou l'entraînement du socle de sortie (3) par le socle intermédiaire (4),
le socle intermédiaire (4) présente au moins un moyen de blocage par coopération de forme avec une partie de retenue du boulon (5), à savoir essentiellement l'écrou ou la tête de la vis du boulon (5), pour permettre son montage avec un seul outil de vissage. Le socle d'entrée (2) et le socle de sortie (3) ne sont donc pas directement en prise l'un avec l'autre, mais par l'intermédiaire d'un socle intermédiaire (4), mis en mouvement par le socle d'entrée (2) et mettant en mouvement le socle de sortie (3). Le boulon (5) de cisaillement peut alors naturellement être prévu entre le socle intermédiaire (4) et le socle d'entrée (2) ou entre le socle intermédiaire (4) et le socle de sortie (3). La figure 1 montre la deuxième possibilité.

L'invention propose d'aménager, au coeur du socle intermédiaire (4), un logement dont la forme géométrique permet de retenir en rotation une partie du boulon (5), préférentiellement son écrou. Ainsi, il suffit d'agir sur l'autre partie de retenue du boulon (5), à savoir préférentiellement la tête de vis, pour réussir à serrer correctement le boulon (5). Il n'est donc pas nécessaire d'avoir accès aux deux extrémités du boulon (5), mais l'accès à l'une d'elle suffit, à savoir l'extrémité du côté du socle d'entrée (2). L'avantage de prévoir, dans le socle intermédiaire (4), une coopération de forme avec l'écrou plutôt qu'avec la tête de la vis est, comme il va être décrit plus loin, qu'il est alors envisageable de laisser un écrou dans une cavité du socle intermédiaire (4).

Il est plus avantageux de prévoir une coopération de forme dans le socle intermédiaire (4) avec l'écrou comme partie de retenue qu'avec la tête de la vis comme partie de retenue.

Pour la partie de retenue qui sera prise dans le socle intermédiaire (4), il est plus avantageux de choisir l'écrou du boulon (5) que de choisir la tête de la vis. En effet, il est alors possible de laisser des écrous totalement inutilisés dans le socle intermédiaire (4), sans qu'ils ne soient dégradés après la casse du boulon (5) de cisaillement, par la rotation qui s'installe entre le socle intermédiaire et le socle auquel le boulon (5) le fixe.

Ainsi, le moyen de blocage prend préférentiellement la forme d'un logement hexagonal (6), dans lequel peut venir la partie de retenue.

De plus, il peut être avantageux de positionner le au moins un boulon (5) plus proche de l'axe de rotation du dispositif de couple (1) que ne l'est la fixation dont est pourvu le socle intermédiaire (4) pour sa mise en mouvement par le socle d'entrée (2). Avec cette configuration, il est en effet difficile d'avoir accès aux deux extrémités du boulon (5), puisque l'une d'elle est masquée par le socle d'entrée (2), de dimensions plus grandes que le socle intermédiaire (4).

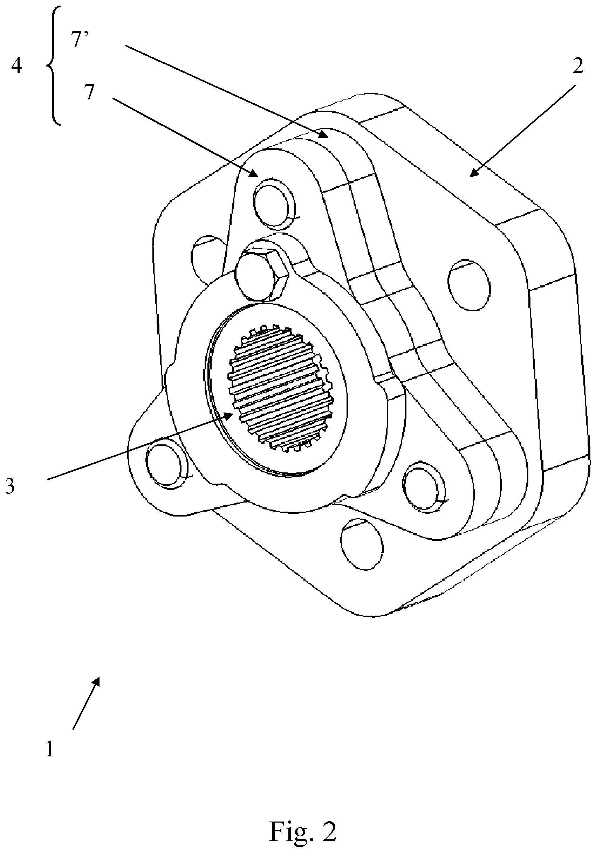

La figure 1 illustre une fixation du socle intermédiaire (4) sur le socle d'entrée (2) à l'aide d'un vissage. Compte tenu de la fonction de protection contre un couple excessif qui doit être réalisée par le boulon (5), calibré, la fixation entre ces deux socles est bien entendu capable de transmettre un couple plus élevé que celui auquel le boulon (5) rompt. Les figures 2 à 5 montrent toutefois que la fixation du socle d'entrée (2) sur le socle intermédiaire (4) se fait par des vis prises dans le socle intermédiaire (4) lui-même, alors que la figure 1 illustre un écrou.

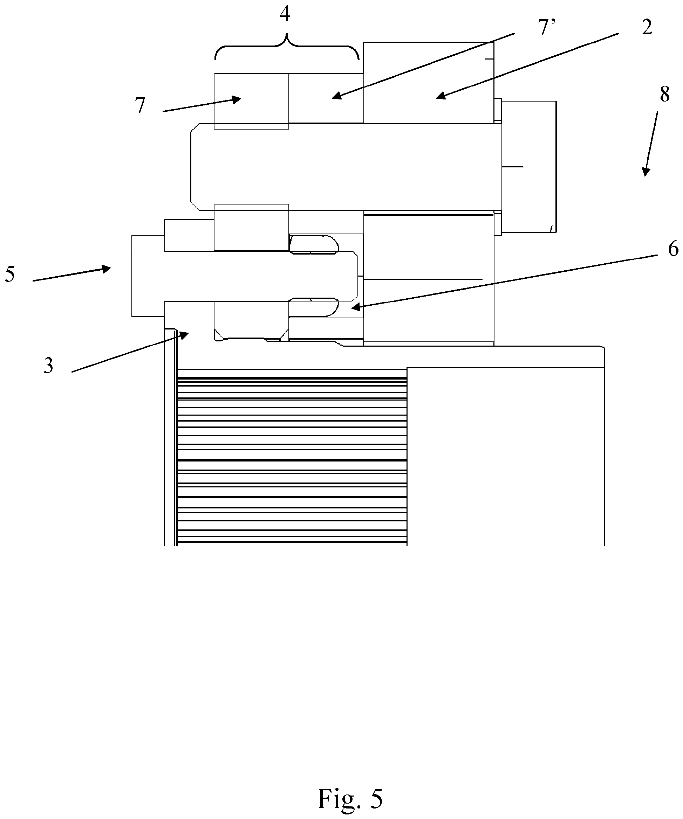

L'invention est par ailleurs caractérisée en ce que le socle intermédiaire (4) prend la forme de deux platines (7, 7') plaquées l'une contre l'autre dans le sens de l'axe de rotation du dispositif limiteur de couple (1),

l'une des platines (7') sert au logement de la partie de retenue du boulon (5), à savoir de l'écrou ou de la tête de la vis, l'autre (7) sert à la fois à l'appui axial de la partie de retenue ainsi qu'au logement de la tige de vis. Il est ainsi possible de prévoir des matériaux ayant des propriétés mécaniques différentes et/ou d'envisager des caractéristiques dimensionnelles plus ou moins précises et/ou de prévoir des procédés de fabrication différents, notamment plus ou moins onéreux et/ou plus ou moins précis, entre d'une part le socle d'entrée et/ou le socle de sortie, et d'autre part les platines, ainsi qu'entre les platines elles-mêmes. Cette possible différenciation du matériau composant ces différentes pièces et/ou de leur caractéristiques géométriques et/ou de leurs procédés de fabrication en fonction des contraintes mécaniques auxquelles ces pièces sont soumises, permet d'abaisser le coût du dispositif limiteur de couple. Il est notamment possible de réaliser le passage pour la tige de vis de façon suffisamment précise sur une platine et/ou de réaliser cette platine dans un matériau présentant des caractéristiques mécaniques élevées, de sorte à avoir un bon contrôle de la résistance au cisaillement. Il est également possible de réaliser le moyen de blocage dans une autre platine, avec des caractéristiques dimensionnelles moins précises et/ou avec un procédé de fabrication plus simple et/ou moins coûteux et/ou moins précis. La figure 5 montre que la tige de vis du boulon (5) traverse le socle de sortie (3) ainsi qu'une des platines (7), puis débouche dans le moyen de blocage, aménagé dans l'autre platine (7'). L'écrou, se trouvant dans le moyen de blocage, arrive contre l'autre platine (7), suite au serrage de la tête de vis du boulon (5).

Selon une caractéristique additionnelle possible, le boulon (5) est monté entre le socle intermédiaire (4) et le socle de sortie (3), ce qui donne plus facilement accès à la tête de la vis depuis le côté extérieur du dispositif limiteur de couple (1). Ainsi, en cas de rupture du boulon (5) compte tenu de la résistance de l'élément entraîné par le socle de sortie (3), le socle intermédiaire (4) continue de tourner et le socle de sortie (3) est fixe. Il est alors avantageux de prévoir un lubrifiant entre les surfaces en contact des deux socles, de sorte à éviter une usure excessive générée par la rotation du seul socle intermédiaire (4) après la rupture du boulon (5) avant la fin de la rotation du socle d'entrée (2).

Selon une autre caractéristique additionnelle possible, le dispositif limiteur de couple (1) présente un plus grand nombre de moyens de blocage que de boulons (5), ledit dispositif de couple (1) présentant notamment un seul boulon (5) complet et une pluralité de moyens de blocage. Avantageusement, un écrou est prévu dans au moins un autre moyen de blocage que celui coopérant avec le au moins un boulon (5), pour pouvoir y serrer une tige filetée pour former un autre boulon (5), et ce sans opération de démontage majeure. Un écrou est notamment prévu dans chaque autre moyen de blocage que celui coopérant avec le au moins un boulon (5). Ainsi, dès la rupture du boulon (5), il suffit d'installer des vis dans les écrous correspondants. Ce n'est qu'une fois tous les écrous pris par des tiges filetées cassées, qu'il est nécessaire de démonter le dispositif limiteur de couple (1) pour les en extraire et replacer un nouveau jeu d'écrous, puis ensuite une vis pour former un nouveau boulon (5).

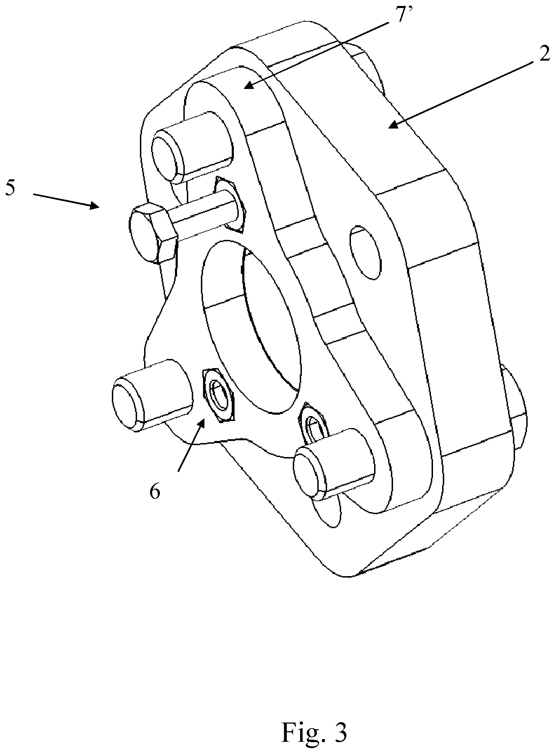

Dans des modes de réalisation particuliers, et selon une caractéristique additionnelle possible, les moyens de blocage sont positionnés les uns par rapport aux autres de sorte que lorsqu'un boulon (5) est engagé dans l'un d'eux, au moins un autre moyen de blocage n'est pas accessible, en étant notamment recouvert par le socle de sortie (3), qui ne présente alors que le nombre d'orifices nécessaires pour faire passer le nombre de boulons (5) correspondant au dimensionnement du couple maximum transmissible. Ainsi, il n'est pas possible d'augmenter le couple maximum transmissible en installant plus de boulons (5) qu'il n'est prévu. Augmenter le couple maximal transmissible peut, en effet, mener à la rupture d'un autre élément de la chaîne cinématique, jusqu'au dispositif de conditionnement. Les figures 2 et 3 montrent que, lorsque l'ensemble des boulons envisagé pour le couple maximal transmissible est effectivement monté, le socle de sortie (3) empêche l'accès aux autres moyens de blocage, où se trouvent à chaque fois une partie de retenue, préférentiellement un écrou, pour former un autre boulon (5) en cas de rupture.

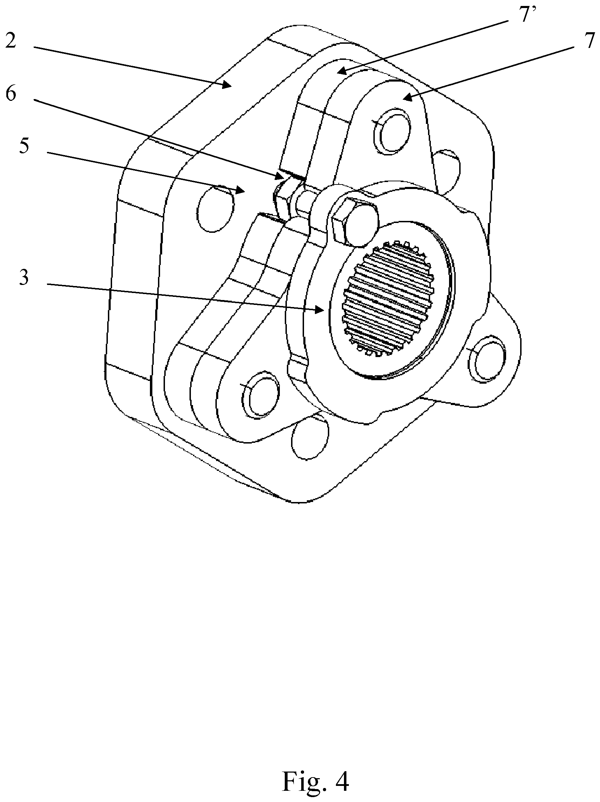

Dans des modes de réalisation particuliers, notamment illustrés à la figure 4, au moins un moyen de blocage débouche à la surface circonférentielle du socle intermédiaire (4), de sorte qu'il est possible d'insérer depuis le côté l'un et/ou l'autre des éléments d'un boulon (5), à savoir l'écrou et/ou la vis. Dans le cas de la figure 4, le socle intermédiaire (4) est aménagé pour que tant l'écrou que la vis puissent être amenés depuis le côté. Dans l'absolu, un tel moyen de blocage débouchant à la surface circonférentielle du socle intermédiaire (4), peut déboucher sur le côté uniquement pour laisser passer un écrou, ou uniquement pour laisser passer une vis. L'avantage d'une telle construction est bien sûr de faciliter le changement des pièces cassées après rupture d'un boulon (5).

Enfin, selon une autre caractéristique additionnelle possible, le dispositif limiteur de couple (1) présente un côté moteur (8), et le socle d'entrée (2) présente des orifices de passage de vis pour la fixation dudit socle à un élément tournant moteur disposé dudit côté moteur (8). L'entraînement du dispositif limiteur de couple (1) se fait donc à partir du côté moteur (8), l'ensemble rotatif (9), notamment de conditionnement, entraîné par le dispositif limiteur de couple (1) se trouvant lui aussi du côté moteur (8). Ainsi, le côté opposé du dispositif limiteur de couple (1) est accessible pour les diverses opérations de maintenance nécessaires. Ainsi, le socle intermédiaire (4) est plaqué contre le socle d'entrée (2) et fixé à ce dernier par un vissage accessible pour dévissage depuis le côté moteur (8), comme le montre en particulier la figure 5. Cette figure montre aussi que le socle intermédiaire (4) est pris entre le socle d'entrée (2) et le socle de sortie (3), et que le socle de sortie (3) :
- est fixé au socle intermédiaire (4) par le au moins un boulon (5) accessible pour dévissage depuis le côté opposé au côté moteur (8),
- s'étend en direction du côté moteur (8) au niveau d'une douille que présente le socle de sortie (3) et qui se trouve au moins au coeur du socle intermédiaire (4) dans un orifice central, que le socle intermédiaire (4) présente, à cet effet, voire aussi au coeur du socle d'entrée (2) dans un orifice central que le socle d'entrée (2) présente lui aussi à cet effet. Ladite douille est notamment cannelée sur sa circonférence intérieure pour l'entraînement d'un arbre de sortie qui y serait introduit.

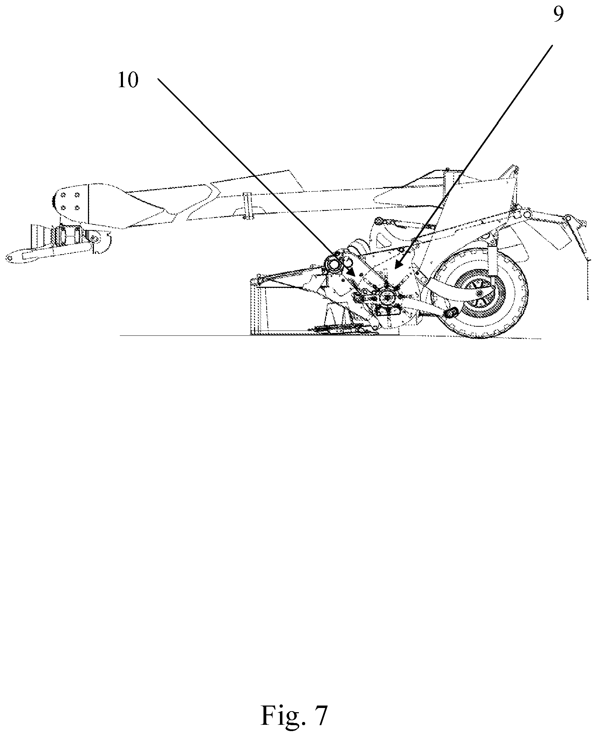

L'invention a aussi pour objet une machine agricole, notamment pour faucher et conditionner des végétaux, présentant un ensemble rotatif (9), notamment de conditionnement de végétaux coupés, entraîné par un jeu d'engrenages (10), ledit jeu étant notamment placé au sein d'un carter latéral (11), placé sur le côté de la machine pour amener un couple à l'ensemble rotatif (9). Il peut s'agir préférentiellement d'une machine pour faucher et conditionner des végétaux, comme le montre la figure 7, destinée à être entraînée par un tracteur.

Selon l'invention, cette machine comprend un dispositif limiteur de couple (1) pour la transmission sécurisée d'une rotation entre un socle d'entrée (2) et un socle de sortie (3) qu'il présente, où ledit dispositif limiteur de couple (1) comprend au moins un boulon (5) d'entraînement qui forme un organe de rupture par cisaillement en cas de couple au-delà d'un seuil prédéterminé, et où ledit boulon (5) comprend un écrou et une vis et présente des parties de retenue.

En outre, le dispositif limiteur de couple (1) est monté entre le jeu d'engrenages (10) au niveau du socle d'entrée (2) et l'ensemble rotatif (9) au niveau du socle de sortie (3),
et dimensionné pour éviter de dégrader le jeu d'engrenages (10) en cas de blocage de l'ensemble rotatif (9). Un tel dispositif limiteur de couple (1) fonctionne donc avec un élément de rupture travaillant en cisaillement dans la transmission du couple jusqu'à l'ensemble rotatif (9).

Le dispositif limiteur de couple (1) peut aussi présenter une ou plusieurs des caractéristiques décrites ci-dessus. Ainsi, dans certains modes de réalisation particuliers de la machine agricole, le dispositif limiteur de couple (1) qu'elle présente en amont de l'ensemble rotatif (9) présente, en outre, un socle intermédiaire (4) qui est entraîné par le socle d'entrée (2) et qui entraîne à son tour le socle de sortie (3),

le au moins un boulon (5) assure l'entraînement du socle intermédiaire (4) par le socle d'entrée (2) ou l'entraînement du socle de sortie (3) par le socle intermédiaire (4),
le socle intermédiaire (4) présente au moins un moyen de blocage par coopération de forme avec une partie de retenue du boulon (5), à savoir essentiellement l'écrou ou la tête de la vis du boulon (5), pour permettre son montage avec un seul outil de vissage.

Dans le mode de réalisation illustré à la figure 2, le dispositif limiteur de couple (1) présente un socle d'entrée (2) sous la forme d'une plaque mise en mouvement grâce à la rotation transmise depuis le tracteur. Le socle d'entrée (2) est ainsi fixé par vissage à la partie amont de la chaîne cinématique, et présente à cet effet des trous débouchant. La tête d'une vis placée dans l'un de ces trous reste accessible une fois le dispositif limiteur de couple (1) normalement placé sur la machine. Il est donc tout à fait possible pour un réparateur d'agir sur ces têtes de vis depuis l'extérieur pour démonter le dispositif limiteur de couple (1).

Le dispositif limiteur de couple (1) présente aussi un socle intermédiaire (4), fixé par vissage au socle d'entrée (2). La figure 2 montre que dans ce mode de réalisation, le socle intermédiaire (4) prend essentiellement la forme d'une étoile à autant de branches que de vis de fixation au socle d'entrée (2), ici trois, régulièrement espacées. Le socle intermédiaire (4) est fixé par vissage au socle d'entrée (2), au niveau de trous débouchant que présente le socle d'entrée (2). Les vis sont alors préférentiellement montées de sorte que les têtes se trouvent du côté du socle d'entrée (2), ce qui permet d'éviter des démontages erronés. Le socle intermédiaire (4) est essentiellement constitué de deux platines (7), (7'), de forme identique et plaquées l'une contre l'autre. L'intérêt d'avoir recours à deux platines plutôt qu'à un socle intermédiaire (4) monobloc sera encore décrit plus loin.

Le dispositif limiteur de couple (1) comprend encore un socle de sortie (3), qui se présente sous la forme, d'une part, d'une portion plane, fixée au socle intermédiaire (4) et contre lui, le socle intermédiaire (4) se trouvant à cet endroit entre le socle d'entrée (2) et le socle de sortie (3), et, d'autre part, d'une portion en forme de douille qui s'étend à l'intérieur du dispositif limiteur de couple (1), depuis ladite portion plane en direction du socle d'entrée (2). Avec une telle construction, il est possible d'aménager un limiteur de couple dont l'entraînement d'entrée et l'entraînement de sortie sont du même côté, ce qui rend totalement accessible une face du dispositif limiteur de couple (1). Le socle de sortie (3), au niveau de sa portion plane, est fixé au socle intermédiaire (4) par au moins un boulon (5), dont la figure 2 montre la tête de la vis. Un tel boulon (5) est classiquement constitué d'une vis et d'un écrou, et c'est préférentiellement la tête hexagonale de la vis qui est accessible depuis la face libre du dispositif limiteur de couple (1). Le boulon (5) forme ainsi l'organe de limitation de couple, travaillant en cisaillement au niveau de la tige de sa vis. En effet, la tige de sa vis s'étend donc, d'une part, dans la partie plane du socle de sortie (3), et, d'autre part, dans le socle intermédiaire (4), en traversant l'une (7) des deux platines. L'effort de cisaillement que subit la tige de la vis du boulon (5), et qui génère une casse en cas de couple excessif, se situe donc dans le plan séparant, d'une part, le socle de sortie (3), et, d'autre part, le socle intermédiaire (4).

La tête de la vis du boulon (5) constitue une partie de retenue, grâce à une forme hexagonale extérieure, compatible avec une clé plate, ou intérieure, compatible avec une clé du type allen. La tête de la vis débouche ainsi hors du socle de sortie (3), pour être totalement accessible du côté libre du dispositif limiteur de couple (1). L'autre partie de retenue du boulon (5) consiste essentiellement en un écrou de forme hexagonale. Cet écrou est pris dans le socle intermédiaire (4), dans une cavité de forme correspondante, pour en éviter la rotation. Le socle intermédiaire (4) assure ainsi le maintien en rotation de l'écrou, de sorte que la simple manoeuvre de la tête de la vis suffit à serrer le boulon (5) et solidariser fermement le socle intermédiaire (4) avec le socle de sortie (3).

Il est donc nécessaire de garantir un bon maintien de la tige filetée du boulon (5) dans le socle intermédiaire (4), afin de garantir que la casse survienne effectivement par cisaillement, et de pouvoir calibrer le boulon (5) en conséquence.

La réalisation du socle intermédiaire (4) sous forme de deux platines (7, 7'), l'une contre l'autre, permet alors d'en prévoir une pour le maintien de la tige de la vis du boulon, pour garantir la sollicitation en cisaillement, et d'en prévoir une autre pour le maintien de l'écrou en rotation. L'avantage de réaliser le socle intermédiaire (4) en deux platines (7, 7'), est alors de pouvoir utiliser des matériaux différents, notamment plus ou moins élaborés et/ou de résistances mécaniques différentes, et/ou des procédés de fabrication différents, notamment plus ou moins élaborés et/ou plus ou moins précis, dans le but d'aménager, dans une platine, un passage pour la tige de vis, et, dans l'autre platine, une cavité pour l'écrou.

La figure 5 montre encore que, une fois le boulon (5) serré, l'écrou, logé dans l'une (7') des deux platines, arrive au contact de l'autre (7), ce qui permet de réaliser la cavité pour écrou avec une section constante. Une fois le socle intermédiaire (4) monté sur le socle d'entrée (2), l'écrou n'est plus accessible, mais seule la tête de la vis l'est encore.

La configuration du socle intermédiaire (4) en étoile est reprise au niveau du socle de sortie (3), puisque, comme le montre la figure 2, le boulon (5) est prévu dans l'une des branches constitutives dudit socle intermédiaire (4). Le boulon (5), l'axe de rotation du dispositif limiteur de couple (1) et une vis de fixation du socle intermédiaire (4) sur le socle d'entrée (2) sont donc alignés. D'autres configurations géométriques sont bien entendu possibles.

Il convient aussi de remarquer que, bien que la figure 2 montre un dispositif limiteur de couple (1) avec un seul boulon (5), il est envisageable que plusieurs boulons (5) soient simultanément montés.

La figure 3 montre un autre aspect avantageux de ce mode de réalisation. Le socle intermédiaire (4) présente une pluralité de logements pour écrous, un écrou étant logé dans plusieurs d'entre eux. Il est ainsi possible de laisser, au coeur du socle intermédiaire (4), au moins un écrou non utilisé. Après rupture de la tige de vis du boulon (5) complet, il suffira alors d'installer une nouvelle tige de vis dans un autre écrou, sans nécessairement libérer tout l'écrou dans lequel est encore logé une partie de la tige rompue. La figure 2 montre que les écrous non utilisés ne sont pas accessibles, ce qui évite le montage simultané d'un nombre excessif de boulons (5), ce qui aurait pour conséquence de moins protéger l'engrenage.

Grâce à la prévision d'une pluralité de cavités pour écrou et, en outre, d'au moins un écrou non utilisé, la réparation est très simple puisqu'après rupture, il suffit d'ôter la partie détachée du boulon (5), de décaler le socle de sortie (2) jusqu'à ce que le trou pour vis soit en vis-à-vis d'un écrou présent dans le socle intermédiaire (4), puis d'y insérer une vis pour former un nouveau boulon (5). Le socle intermédiaire (4) forme donc aussi un chargeur prérempli pour former rapidement un nouveau boulon (5). Après plusieurs casses successives, lorsque tous les écrous du dispositif limiteur de couple (1) auront été utilisés, il sera alors nécessaire de séparer le socle intermédiaire (4) du socle d'entrée (2), afin de pouvoir déloger les écrous, une partie de tige y étant vissée.

La figure 4 représente un deuxième mode de réalisation de l'invention, qui facilite le changement de l'écrou. Après rupture de la tige de vis, dans le plan séparant le socle de sortie (3) et le socle intermédiaire (4), il peut être avantageux de pouvoir tout de suite remplacer les deux parties du boulon (5) séparées par la cassure, à savoir, d'une part, une partie de la vis, et, d'autre part, un écrou avec le reste de la vis.

La figure 4 montre que la cavité, dans laquelle l'écrou est logé, mais aussi la cavité que traverse la vis, débouche sur le côté du socle intermédiaire (4), à sa circonférence extérieure. Ainsi, la mise en place ou l'extraction d'un écrou ne se fait pas par l'arrière du dispositif limiteur de couple (1), c'est-à-dire du côté du socle d'entrée (2), mais bien depuis le côté du socle intermédiaire (4). Il est ainsi possible, après rupture, d'extraire latéralement l'écrou et la partie de la vis qui y est prise, puis de remettre depuis le côté un nouvel écrou, et enfin d'engager une nouvelle tige filetée pour former un nouveau boulon (5).

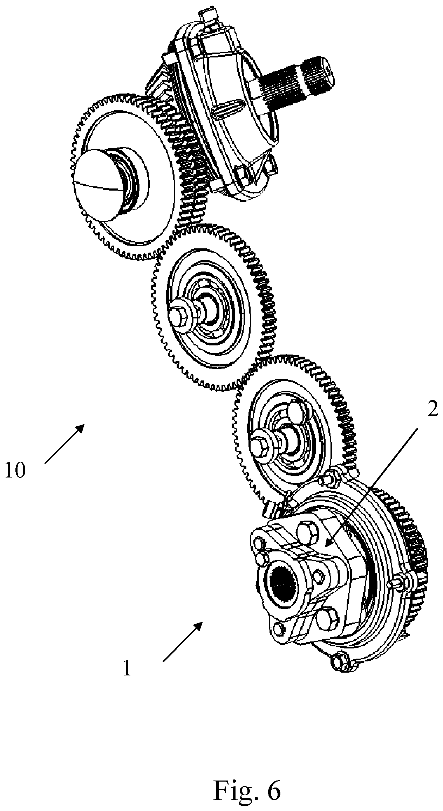

La figure 6 montre le jeu d'engrenages (10) qui se trouve dans le carter. Cette figure montre que le socle d'entrée (2) se trouve contre la dernière roue dentée, la plus basse, le socle de sortie (3) se trouve à l'autre extrémité du dispositif limiteur de couple (1). La roue dentée contre laquelle se trouve le dispositif limiteur de couple (1) se trouve donc, par rapport au dispositif limiteur de couple (1), du même côté de l'arbre que le dispositif limiteur de couple (1) entraîne en aval. De l'autre côté du dispositif limiteur de couple (1) se trouve sa partie accessible, à partir de laquelle des opérations de maintenance peuvent être réalisées. La figure illustre que le démontage du dispositif limiteur de couple (1), mais surtout le démontage du boulon (5) peuvent tous deux s'exécuter du même côté. Elle illustre aussi que le socle intermédiaire (4) est placé directement contre le socle d'entrée (2), mais aussi que le boulon (5) ne se trouve pas à la périphérie tant du socle intermédiaire (4) que du socle d'entrée (2), ce qui empêche l'accès facile à l'écrou depuis l'arrière. Sans l'invention, en cas de rupture du boulon (5), il serait nécessaire de séparer le dispositif limiteur de couple (1) de la roue sur laquelle il est monté, ce qui est possible grâce aux têtes de vis débouchant en partie avant, puis de séparer ensuite le socle d'entrée (2) du socle intermédiaire (4), grâce à l'accès obtenu aux têtes des vis de fixation entre eux, puis de changer l'écrou.

Avec un dispositif limiteur de couple (1) selon l'invention, le remplacement des pièces de rupture est très aisé, le dispositif limiteur de couple présentant en outre un faible encombrement. Le recours à un dispositif général, limiteur de couple par cisaillement, pour protéger l'ensemble rotatif, notamment de conditionnement, d'une machine agricole, permet de fiabiliser la transmission et de réduire son encombrement.

Bien entendu, l'invention n'est pas limitée aux modes de réalisation décrits et représentés aux dessins annexés. Des modifications restent possibles, notamment du point de vue de la constitution des divers éléments, par combinaison différente de tout ou partie des caractéristiques décrites ci-dessus, ou par substitution d'équivalents techniques, sans sortir pour autant du domaine de protection de l'invention.

## Revendications

1. Dispositif limiteur de couple (1) pour la transmission sécurisée d'une rotation entre un socle d'entrée (2) et un socle de sortie (3) qu'il présente, où ledit dispositif limiteur comprend au moins un boulon (5) d'entraînement qui forme un organe de rupture par cisaillement en cas de couple au-delà d'un seuil prédéterminé, et où ledit boulon (5) comprend un écrou et une vis et présente des parties de retenue, ***caractérisé en ce que*** le dispositif limiteur de couple (1) présente, en outre, un socle intermédiaire (4) qui est entraîné par le socle d'entrée (2) et qui entraîne à son tour le socle de sortie (3),
le au moins un boulon (5) assure l'entraînement du socle intermédiaire (4) par le socle d'entrée (2) ou l'entraînement du socle de sortie (3) par le socle intermédiaire (4),
le socle intermédiaire (4) présente au moins un moyen de blocage par coopération de forme avec une partie de retenue du boulon (5), à savoir essentiellement l'écrou ou la tête de la vis du boulon (5), pour permettre son montage avec un seul outil de vissage,
et le socle intermédiaire (4) prend la forme de deux platines (7, 7') plaquées l'une contre l'autre dans le sens de l'axe de rotation du dispositif limiteur de couple (1), l'une des platines (7') sert au logement de la partie de retenue du boulon (5), l'autre (7) sert à la fois à l'appui axial de la partie de retenue ainsi qu'au logement de la tige de vis.

2. Dispositif selon la revendication 1, ***caractérisé en ce que*** le boulon (5) est monté entre le socle intermédiaire (4) et le socle de sortie (3).

3. Dispositif selon la revendication 1 ou 2, ***caractérisé en ce que*** le au moins un moyen de blocage débouche à la surface circonférentielle du socle intermédiaire (4), de sorte qu'il est possible d'insérer depuis le côté l'un et/ou l'autre des éléments d'un boulon (5), à savoir l'écrou et/ou la vis.

4. Dispositif selon l'une quelconque des revendications 1 à 3, ***caractérisé en ce qu'***il présente un côté moteur (8), et le socle d'entrée (2) présente des orifices de passage de vis pour la fixation dudit socle à un élément tournant moteur disposé dudit côté moteur (8), le socle intermédiaire (4) est plaqué contre le socle d'entrée (2) et fixé à ce dernier par un vissage accessible pour dévissage depuis le côté moteur (8), et est pris entre le socle d'entrée (2) et le socle de sortie (3), et le socle de sortie (3) :
- est fixé au socle intermédiaire (4) par le au moins un boulon (5) accessible pour dévissage depuis le côté opposé au côté moteur (8),
- s'étend en direction du côté moteur (8) au niveau d'une douille que présente le socle de sortie (3) et qui se trouve au moins au coeur du socle intermédiaire (4) dans un orifice central que le socle intermédiaire (4) présente à cet effet.

5. Machine agricole, notamment pour faucher et conditionner des végétaux, présentant un ensemble rotatif (9), notamment de conditionnement de végétaux coupés, entraîné par un jeu d'engrenages (10), ***caractérisé en ce qu***'elle comprend un dispositif limiteur de couple (1) selon l'une quelconque des revendications 1 à 4, où le dispositif limiteur de couple (1) est monté entre le jeu d'engrenages (10) au niveau du socle d'entrée (2) et l'ensemble rotatif (9) au niveau du socle de sortie (3) et dimensionné pour éviter de dégrader le jeu d'engrenages (10) en cas de blocage de l'ensemble rotatif (9).

## Patentansprüche

1. Drehmomentbegrenzer (1) für die gesicherte Übertragung einer Drehung zwischen einer Antriebskupplung (2) und einer Abtriebskupplung (3), die er aufweist, wobei der Drehmomentbegrenzer (1) mindestens einen Antriebsbolzen (5) umfasst, der ein Scherbruchelement im Fall eines einen vorausbestimmten Grenzwert überschreitendes Drehmoments bildet, und wobei der Bolzen (5) eine Mutter und eine Schraube umfasst und Sperrteile aufweist, ***dadurch gekennzeichnet,* dass** der Drehmomentbegrenzer (1) ferner eine Zwischenkupplung (4) aufweist, die von der Antriebskupplung (2) angetrieben wird und die ihrerseits die Abtriebskupplung (3) antreibt, wobei der mindestens eine Bolzen (5) den Antrieb der Zwischenkupplung (4) durch die Antriebskupplung (2) oder den Antrieb der Abtriebskupplung (3) durch die Zwischenkupplung (4) sicherstellt,
wobei die Zwischenkupplung (4) mindestens ein Verriegelungsmittel durch Gestaltanpassung mit einem Sperrteil des Bolzens (5), nämlich im Wesentlichen die Mutter oder der Schraubenkopf des Bolzens (5) aufweist, um seine Anbringung mit nur einem Schraubwerkzeug zu ermöglichen,
und die Zwischenkupplung (4) die Form von zwei Platinen (7, 7') hat, die in Richtung der Drehachse des Drehmomentbegrenzers (1) gegeneinander gepresst sind, eine der Platinen (7') dient als Logis für den Sperrteil des Bolzens (5), die andere (7) dient sowohl als axiale Auflage für den Sperrteil als auch als Logis für den Schraubenstab.

2. Vorrichtung nach Anspruch 1, ***dadurch gekennzeichnet,* dass** der Bolzen (5) zwischen der Zwischenkupplung (4) und der Abtriebskupplung (3) angebracht ist.

3. Vorrichtung nach Anspruch 1 oder 2, ***dadurch gekennzeichnet,* dass** das mindestens eine Verriegelungsmittel an der Umfangsfläche der Zwischenkupplung (4) mündet, so dass eines und/oder das andere Element eines Bolzens (5), nämlich die Mutter und/oder die Schraube, von der Seite eingefügt werden kann.

4. Vorrichtung nach irgend einem der Ansprüche 1 bis 3, ***dadurch gekennzeichnet,* dass** sie eine Motorseite (8) aufweist und die Antriebskupplung (2) Öffnungen für den Schraubendurchgang zur Befestigung der Antriebskupplung an einem drehenden Motorelement aufweist, das auf Motorseite (8) angeordnet ist, dass die Zwischenkupplung (4) gegen die Antriebskupplung (2) gepresst und an dieser Letzteren durch eine Verschraubung befestigt ist, die zum Abschrauben von der Motorseite (8) aus zugänglich ist, und zwischen der Antriebskupplung (2) und der Abtriebskupplung (3) aufgenommen ist und dass die Abtriebskupplung (3):
- an der Zwischenkupplung (4) durch den mindestens einen Bolzen (5) befestigt ist, der zum Abschrauben von der Seite aus zugänglich ist, die der Motorseite (8) gegenüberliegt,
- sich Richtung Motorseite (8) auf Höhe einer Hülse erstreckt, welche die Abtriebskupplung (3) aufweist und die sich mindestens in der Mitte der Zwischenkupplung (4) in einer zentralen Öffnung befindet, welche die Zwischenkupplung (4) dafür aufweist.

5. Landwirtschaftliche Maschine, insbesondere zum Mähen und Aufbereiten von Pflanzen, die eine Drehbaugruppe (9) aufweist, insbesondere zum Aufbereiten geschnittener Pflanzen, die von einem Zahnradsatz (10) angetrieben wird, ***dadurch gekennzeichnet,* dass** sie einen Drehmomentbegrenzer (1) nach irgend einem der Ansprüche 1 bis 4 aufweist, wobei der Drehmomentbregenzer (1) zwischen dem Zahnradsatz (10) auf Höhe der Antriebskupplung (2) und der Drehbaugruppe (9) auf Höhe der Abtriebskupplung (3) angebracht und dimensioniert ist, um eine Beschädigung des Zahnradsatzes (10) im Fall einer Sperre der Drehbaugruppe (9) zu vermeiden.

## Claims

1. Torque-limiting device (1) for the secure transmission of a rotation between an inlet baseplate (2) and an outlet baseplate (3), both being part of the said torque-limiting device (1), which also comprises at least one drive bolt (5) that forms a breaking element by shearing in case of a torque exceeding a predetermined threshold, and where the said bolt (5) comprises a nut and a screw and has locking parts, ***characterized in that*** the torque-limiting device (1) further has an intermediate baseplate (4) that is driven by the inlet baseplate (2) and that drives the outlet baseplate (3),
the at least one bolt (5) ensures the driving of the intermediate baseplate (4) by the inlet baseplate (2) or the driving of the outlet baseplate (3) by the intermediate baseplate (4),
the intermediate baseplate (4) has at least one locking element by shape cooperation with a locking part of the bolt (5), i.e., essentially the nut or the head of the screw of the bolt (5), to allow it to be mounted with a single screwing tool,
and the intermediate baseplate (4) assumes the form of two plates (7, 7') pressed against one another in the direction of the rotation axis of the torque-limiting device (1), one of the plates (7') serves for housing the locking part of the bolt (5), and the other (7) serves both as axial support for the locking part as well as for housing the screw rod.

2. Device according to claim 1, ***characterized in that*** the bolt (5) is mounted between the intermediate baseplate (4) and the outlet baseplate (3).

3. Device according to claim 1 or 2, ***characterized in that*** the at least one locking element emerges at the circumferential surface of the intermediate baseplate (4), such that it is possible to insert, from the side, one and/or the other of the elements of a bolt (5), namely the nut and/or the screw.

4. Device according to any one of claims 1 to 3, ***characterized in that*** it has an engine's side (8), and the inlet baseplate (2) has screw passage orifices for fastening the said baseplate to a driving rotary element positioned on the said engine's side (8), the intermediate baseplate (4) is pressed against the inlet baseplate (2) and fastened to the latter by screwing accessible for unscrewing from the engine's side (8), and is caught between the inlet baseplate (2) and the outlet baseplate (3), and the outlet baseplate (3):
- is fastened to the intermediate baseplate (4) by the at least one bolt (5) accessible for unscrewing from the side opposite the engine's side (8),
- extends in the direction of the engine's side (8) at a socket that the outlet baseplate (3) has and which is located at least at the heart of the intermediate baseplate (4) in a central orifice that the intermediate baseplate (4) has to that end.

5. Agricultural machine, in particular for cutting and conditioning plants, having a rotary assembly (9), in particular for conditioning cut plants, driven by a set of gears (10), ***characterized in that*** it comprises a torque-limiting device (1) according to any one of claims 1 to 4, where the torque-limiting device (1) is mounted between the set of gears (10) at the inlet baseplate (2) and the rotary assembly (9) at the outlet baseplate (3), and sized to avoid damaging the set of gears (10) in case of blockage of the rotary assembly (9).
